(19) Europäisches Patentamt
European Patent Office
Office européen des brevets

(11) **EP 1 630 981 A2**

(12) **EUROPEAN PATENT APPLICATION**

(43) Date of publication:
**01.03.2006 Bulletin 2006/09**

(51) Int Cl.:
***H04B 7/26*** *(2006.01)*

(21) Application number: **05254484.8**

(22) Date of filing: **19.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **25.08.2004 JP 2004245391**

(71) Applicant: **FUJITSU LIMITED**
**Kawasaki-shi,**
**Kanagawa 211-8588 (JP)**

(72) Inventor: **Hamada, Yutaka,**
**Fujitsu Limited**
**Kawasaki-shi**
**Kanagawa 211-8588 (JP)**

(74) Representative: **Hitching, Peter Matthew et al**
**Haseltine Lake,**
**Imperial House,**
**15-19 Kingsway**
**London WC2B 6UD (GB)**

(54) **Transmission time measurement method and corresponding mobile communications system**

(57) A mobile communication system and method enables measurement of the time (round-trip time) required for data transmission between a retransmission controller and a mobile station. The mobile communication system is HSDPA-compatible and comprises a mobile station (21), a wireless base station (22) and a retransmission controller (24) which transmits data units to the mobile station (21) via the wireless base station (22), the mobile communication system characterized as being provided with a control part, which, when obtaining the round-trip time with respect to transmission between the mobile station (21) and the retransmission controller (24), obtains [the round-trip time] in accordance with the reception of an ACK signal relating to H-ARQ control broadcast from the mobile station, and uses the transmission time in the wireless interval between the mobile station and the wireless base station.

Fig. 3

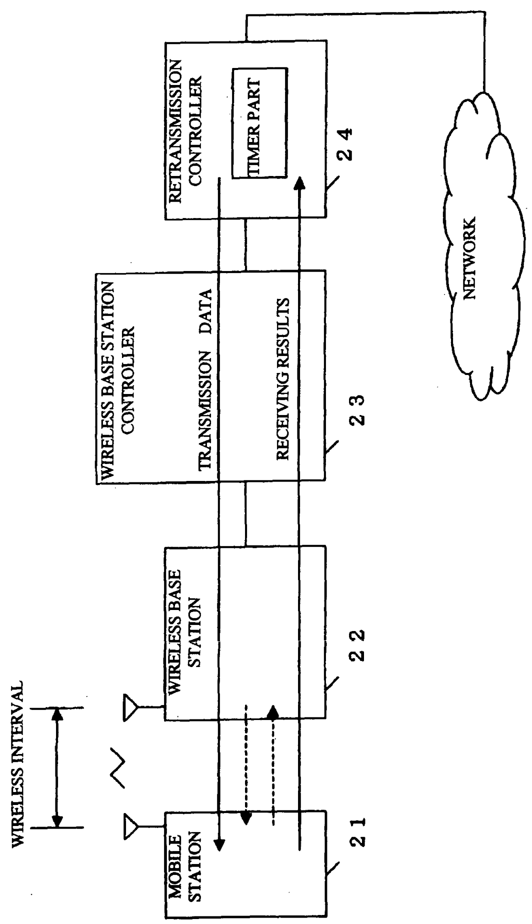


EP 1 630 981 A2

## Description

This application is related to and claims priority to Japanese Application No. 2004-245391 filed August 25, 2004 in the Japanese Patent Office, the contents of which are incorporated by reference herein.

1. Field of the Invention

The present invention relates to a mobile communication system provided with a transmission time measurement function, a transmission time measurement method and a transmission control method, for example, a mobile communication system using the HSDPA system, and a transmission time measurement method used in such system.

2. Description of the Related Art

The configuration of a mobile communication system is shown in Figure 1.

In the figure, 11 represents a mobile station, 12 a wireless base station, 13 a wireless base station controller, and 14 a retransmission controller. A W-CDMA (UMTS) mobile communication system can be used as the mobile communication system, and here a W-CDMA mobile communication system is used as an example.

Since the mobile station 11 and wireless base station 12 perform wireless communication using a wireless link, the distance between the mobile station 11 and a wireless base station 12 is permitted to vary, and so-called mobile communication becomes possible.

The wireless base station controller 13 is a relay node existing between the wireless base station 12 and retransmission controller 14, and for example, when multiple wireless base stations 12 are connected, controls to which one of such multiple connected wireless base stations data received from the retransmission controller 14 will be sent. Moreover, when a mobile station 11 can perform wireless communication with a plurality of wireless base stations 12 (when a handover status is permissible), a diversity effect can be obtained by receiving the signal transmitted from the mobile station 11 using a plurality of wireless base stations and directing it to a retransmission controller 14 after selection combination by the wireless base station controller 13.

The retransmission controller 14 controls data received via the network so that it is transmitted to a mobile station 11 and also determines whether or not retransmission of the data is required by receiving the receiving results of the data from the mobile station (e.g., an ACK signal or NACK signal). When there is a problem in the receiving results (e.g., when an NACK signal is received or an ACK signal is not received) retransmission of the received data is performed.

The foregoing explanation concerned a commonly used mobile communication system provided with a retransmission control function, but retransmission control is also sometimes performed with respect to the wireless intervals, which are the communication intervals between the mobile station 11 and wireless base station 12.

A mobile communication system using HSDPA (High-Speed Downlink Packet Access) is discussed as an example in which retransmission control of the wireless interval is performed.

·"HSDPA"

HSDPA is a system which is characterized as being able to switch adaptively between a QPSK modulation scheme and hexadecimal QAM scheme in accordance with the wireless environment between the base station and mobile station, using adaptive modulation and coding (AMC).

HSDPA uses an H-ARQ (Hybrid Automatic Repeat reQuest) system. In the H-ARQ system, when the mobile station detects an error in received data from a base station, it makes a retransmission request (sends an NACK signal) to that base station. The base station, upon receiving this retransmission request, resends the data, and the mobile station performs error correction decoding using both the data already received and the retransmitted received data. In this way, with the H-ARQ system, even if errors exist, the data already received can be used effectively, the benefit of error correction decoding is increased, and the number of retransmissions can be held down. When an ACK signal is received from the mobile station, data transmission has been successful, so retransmission is unnecessary, and transmission of the next data is performed.

The main radio channels used in HSDPA are the HS-SCCH (High Speed-Shared Control Channel), HS-PDSCH (High Speed-Physical Downlink Shared Channel) and HS-DPCCH (High Speed-Dedicated Physical Control Channel).

The HS-SCCH and HS-PDSCH are both shared channels in the downlink direction (i.e., downlink in the direction from the base station to the mobile station), and HS-SCCH is a control channel that transmits various parameters relating to the data sent by the HS-PDSCH. In other words, it is a channel that provides notification (warning) that data transmission will be made via the HS-PDSCH.

Examples of these various parameters include information such as modulation scheme information indicating which modulation scheme was used to transmit the data by HS-PDSCH, the quota (code number) of the spreading code, and the pattern of rate matching performed with respect to the transmission data.

On the other hand, HS-DPCCH is a dedicated control channel in the uplink direction (i.e., uplink in the direction from the mobile station to the base station), and is used when the mobile station transmits to the base station respective receiving results (an ACK signal or NACK signal) in accordance with the presence or absence of errors in data received via the HS-PDSCH. Specifically, it is a channel used to transmit receiving results for data received via the HS-PDSCH. If the mobile station has failed to receive data (e.g., the received data is a CRC error), a NACK signal will be transmitted from the mobile station, so the base station will perform retransmission control.

The HS-DPCCH is used for the mobile station that has measured receiving quality (e.g., SIR) of a received signal from the base station to transmit the results thereof to the base station CQI (Channel Quality Indicator) information. The base station determines the quality of the wireless environment of the downlink direction based on the CQI information received, and if the quality is good, switches to a modulation system that can transmit data more quickly, while if it is poor, switches to a modulation system that will transmit the data more slowly (i.e., performs adaptive modulation).

·"Channel Structure"

Next, the channel configuration in HSDPA is explained.

Figure 2 is a diagram showing the channel configuration in HSDPA. Since W-CDMA uses code division multiplexing, a channel is separated according to a code.

First, channels not yet discussed are briefly explained.

The CPICH (Common Pilot Channel) and SCH (Synchronization Channel) are both common downlink channels.

The CPICH is a channel used for channel estimation and cell search in the mobile station and as a timing standard for other downlink physical channels in the same cell, and is a channel for transmitting a so-called pilot signal. The SCH, strictly speaking, consists of a P-SCH (primary SCH) and S-SCH (secondary SCH), and is a channel that performs transmission in a burst state in 256 chips at the head of each slot. The SCH is received by the mobile station that performs a three-stage cell search and is used for establishing slot synchronization and frame synchronization.

Next, the channel timing relationship is described using Figure 2.

As shown in the figure, each channel is composed of 15 slots (each slot is equivalent to the length of 2560 chips) and constitutes 1 frame (10 ms). As explained previously, since the CPICH is used as a standard for other channels, the head of the frame of the P-CCPCH and HS-SCCH correspond to the head of the CPICH. Here, the head of the HS-PDSCH frame is delayed by 2 slots with respect to the HS-SCCH and others, but this is so that, after the mobile station receives modulation scheme information via the SH-SCCH, it is able to perform the modulation of the HS-PDSCH by a demodulation scheme corresponding to the modulation scheme received. The HS-SCCH and HS-PDSCH also compose 1 subframe with 3 slots.

HS-DPCCH is an uplink channel, and its first slot is used to transmit from the mobile station to the base station an ACK/NACK signal indicating the receiving results of the HS-PDSCH after about 7.5 slots have elapsed from the receipt of the HS-PDSCH. The second and third slots are used for the periodic back transmission of CQI information to the base station for adaptive modulation control. Here, the CQI information transmitted is calculated based on the reception environment (e.g., SIR measurement results of the CPICH) measured during the interval from 4 slots to 1 slot before CQI transmission.

Matters relating to HSDPA as described above are disclosed, for example, in the following Nonpatent References 1 and 2:

(Nonpatent Reference 1) 3G TS 25.212 (3rd Generation Partnership Project: Technical Specification Group Radio Access Network; Multiplexing and channel coding (FDD))

(Nonpatent Reference 2) 3G TS 25.214 (3rd Generation Partnership Project: Technical Specification Group Radio Access Network; Physical layer procedures (FDD))

In the background art explained above, there is no function for measuring the time required for data transmission between the retransmission controller and the mobile station.

It is desirable to offer various methods that enable measurement of the time (round-trip time) required for data transmission between the retransmission controller and mobile station.

It is also desirable to achieve the improvement of transmission efficiency by using the transmission time (round-trip time) measured for transmission control.

According to an embodiment of a first aspect of the present invention, there is provided a mobile communication system which is HSDPA-compatible and comprises a mobile station, a wireless base station and a retransmission controller which transmits data units to said mobile station via said wireless base station is used, said mobile communication system characterized as being provided with a control part for utilizing the transmission time, which is relating to the wireless interval between said mobile station and said wireless base station, obtained in accordance with the reception of an ACK signal transmitted by said mobile station under the H-ARQ control to obtain the round-trip time with respect to transmission between said mobile station and said retransmission controller.

Preferably, a mobile communication system embodying the aforementioned first aspect of the present invention is further characterized in that retransmission control on the RLC layer is applied to the transmission between said mobile station and said retransmission controller and said control part performs variable control of the settings of the number of data units for which transmission is permitted from the transmission of a data unit from said retransmission controller until the receipt of an ACK signal transmitted from said mobile station concerning said retransmission control on the RLC layer, based on said round-trip time that has been obtained.

According to an embodiment of a second aspect of the present invention, there is provided a transmission time measurement method to obtain the round-trip time relating to transmission between a mobile station and a retransmission controller in a mobile communication system which is HSDPA-compatible and comprises a mobile station, a wireless base station and a retransmission controller which transmits data units to said mobile station via said wireless base station, said transmission time measurement method characterized as comprising a step whereby the transmission time, in the wireless interval between said mobile station and said wireless base station, obtained by the receipt of an ACK signal transmitted by said mobile station under H-ARQ, and a step whereby the round-trip time is calculated using the transmission time in said wireless interval.

According to an embodiment of a third aspect of the present invention, there is provided a transmission time measurement method which comprises a step whereby data is transmitted from a retransmission controller to a mobile station via a wireless base station, a step whereby receiving result indicating that said data could be received from said mobile station are transmitted, and a step whereby said receiving result are received by said retransmission controller, and which is characterized in that the time required from the transmission of said data until the receipt of said receiving result is calculated using a timer function in said retransmission controller.

According to an embodiment of a fourth aspect of the present invention, there is provided a transmission time measurement method which comprises: a step whereby data is transmitted from a retransmission controller to a mobile station via a wireless base station, a step whereby receiving result indicating that said data could be received from said mobile station are transmitted, and a step whereby said receiving result is received by said retransmission controller, and which is characterized in that the time required from the transmission of said data until the receipt of said receiving result is calculated using a timer function in said retransmission controller, and based on the result of said measurement, the number of data units which permit transmission in the interval from the transmission of certain data until the receipt of receiving result indicating that data could be received from said mobile device with respect to said certain data are variably controlled.

According to an embodiment of a fifth aspect of the present invention, there is provided a mobile communication system which comprises a mobile station, a wireless base station, and a first retransmission controller that transmits data to said mobile station via said wireless base station, said mobile communication system being characterized in that: said mobile station is provided with a control part, which controls the transmission of receiving result that indicate that said data could be received, and said retransmission controller is provided with a clock means which measures the time from the transmission of said data until the receipt of said receiving result.

According to an embodiment of a sixth aspect of the present invention, there is provided a mobile communication system which comprises a mobile station, a wireless base station, and a retransmission controller that is operable to transmit data to said mobile station via said wireless base station based on first retransmission control, said mobile communication system being characterized in that: said wireless base station comprises a second retransmission function part, which is operable to perform second retransmission control with respect to said data on a lower layer than said first retransmission control, and a measuring part, which is operable to measure the transmission time with respect to the wireless interval between said mobile station and said wireless base station by receiving the receiving result indicating that data could be received from said mobile station relating to said second retransmission control.

Preferably, a mobile communication system embodying the aforementioned sixth aspect of the present invention is further characterized as being provided with: a control part, which is operable to correct the transmission time by adding processing time that at least includes a rearrangement time in said mobile station to the transmission time measured by said measuring part.

Preferably, a mobile communication system embodying the aforementioned sixth aspect of the present invention is further characterized as being provided with: a memory part, which is operable to store said transmission time that has been measured by said measuring part.

Preferably, a mobile communication system embodying the aforementioned sixth aspect of the present invention is further characterized in that: said memory part is provided in said wireless base station, and said retransmission controller is provided with a control message processing part, which is operable to receive a capacity allocation message that includes information relating to the transmission time stored in said memory part by transmitting a capacity request message

According to an embodiment of a seventh aspect of the present invention, there is provided a mobile communication system which comprises a mobile station, a wireless base station, and a retransmission controller operable to transmit data to said mobile station via said wireless base station based on a first retransmission control, said mobile communication system being characterized in that: said wireless base station comprises a second retransmission function part, operable to perform second retransmission control with respect to said data on a lower layer than said first retransmission control, and a control part, which after receiving a first signal from said retransmission controller, when receiving result, which is concerning to said second retransmission control, transmitted from said mobile station with respect to said data that has been transmitted to said mobile station and indicating said data could be received, is operable to perform control whereby a second signal is transmitted to said retransmission controller.

According to an embodiment of an eighth aspect of the present invention, there is provided a mobile communication system which comprises a mobile station, a wireless base station, and a retransmission controller that is operable to transmit data to said mobile station via said wireless base station based on a first retransmission control, said mobile communication system being characterized as further comprising a control part, operable to measure or estimate the time from the transmission of data subject to said first retransmission control from said retransmission controller to said mobile station, up to the receipt by said retransmission controller of receiving result transmitted from said mobile station for said first retransmission control and indicating that said data could be received, and by the fact that said control part based on said time, is operable to variably control the number of data units that can be transmitted by said retransmission controller during the interval from the transmission of data from said retransmission controller to said mobile station up to the receipt of receiving result indicating that such said data could be received by said retransmission controller.

Preferably, a mobile communication system embodying the aforementioned eighth aspect of the present invention is further characterized in that said variable control performed by said control part is performed by setting, based on said time, the number of data units that can secure the highest permissible transmission rate notified by said wireless base station.

By means of embodiments of the present invention, it is possible to offer various methods whereby the time required for data transmission between the retransmission controller and mobile station can be measured.

Moreover, by using the transmission time (round-trip time) measured for transmission control, it is possible to improve the transmission efficiency.

Reference will now be made, by way of example, to the accompanying drawings, of which:

Fig. 1 is a diagram showing a mobile communication system.
Fig. 2 is a diagram showing the channel configuration in HSDPA.
Fig. 3 is a diagram showing a mobile communication system according to an embodiment of the present invention.
Fig. 4 is a diagram showing a retransmission controller for use in an embodiment of the present invention.
Fig. 5 is a diagram showing a wireless base station controller for use in an embodiment of the present invention.
Fig. 6 is a diagram showing a wireless base station for use in an embodiment of the present invention.
Fig. 7 is a diagram showing a mobile station for use in an embodiment of the present invention.
Fig. 8 is a diagram showing a format of an RLC PDU.
Fig. 9 is a diagram showing a format in accordance with HS-DSCH FP.
Fig. 10 is a diagram showing a format of an MAC-hs PDU.
Fig. 11 is a diagram showing a capacity request message.
Fig. 12 is a diagram showing a capacity allocation message.

(a) Explanation of Embodiment 1

In Embodiment 1, the transmission time (round-trip time) is obtained by actually measuring the time from transmission of data from the retransmission controller to the mobile station until receiving results for that data are received from the mobile station.

Figure 3 shows one example of the configuration of a mobile communication system according to an embodiment of the present invention. Although various types of communication system can be considered, this explanation concerns a mobile communication system that works with HSDPA and is based on a W-CDMA mobile communication system, similar to that explained with respect to background art. Of course, this explanation can also be applied to communication systems provided with retransmission control functions (a system which performs two types of retransmission control, one in a wireless interval between the mobile station and wireless base station and one in a interval between the mobile station and a retransmission controller, is especially desirable).

In the figure, 21 represents the mobile station, 22 to the wireless base station, 23 the wireless base station control part, and 24 the retransmission controller.

The wireless communication is conducted by using a wireless link between the mobile station 21 and the wireless base station 22. Therefore it is permitted to have the distance between the mobile station 21 and wireless base station 22 vary for making so-called mobile communication possible.

The wireless base stations control part 23 is a relay node existing between the wireless base station 22 and retransmission controller 24, and for example, when multiple wireless base stations 22 are connected, controls to which one of such multiple connected wireless base stations data received from the retransmission controller 24 will be sent. Moreover, when a mobile station 21 can perform wireless communication with a plurality of wireless base stations 22 (when a handover status is permissible), a diversity effect can be obtained by receiving the signal transmitted from the mobile station 21 using a plurality of wireless base stations and directing it to a retransmission controller 24 after selection combination by the wireless base station controller 23.

The retransmission controller 24 controls data received via the network so that it is transmitted to a mobile station 21 and also determines whether or not retransmission of the data is required by receiving the receiving results of the data from the mobile station (e.g., an ACK signal or NACK signal). When there is a problem in the receiving results (e.g., when an NACK signal is received or an ACK signal is not received) retransmission of the received data is performed. Retransmission control between the mobile station 21 and retransmission controller 24 is referred to as "first retransmission control."

In addition, in this embodiment, since a system which uses an HSDPA (High Speed Downlink Packet Access) scheme is used as an example, as indicated above, retransmission control (second retransmission control) is performed in accordance with H-ARQ control in the wireless interval between the mobile station 21 wireless base station 22.

In this embodiment, furthermore, the retransmission controller measures the transmission time required from the time (t1) data has been transmitted from the retransmission controller 24 until the time (t2) at which the retransmission controller 24 has received receiving results (here, an ACK signal), which is addressed to the retransmission controller and used for the first retransmission control, from the mobile station 21 which has received this data through the wireless base station controller 23 and wireless base station.

Specifically, the control part 27 of the retransmission controller 24 measures the elapsed time (t2 — t1) based on the timer value of the timer part obtained for the time transmitted (t1) in the timer value of the timer part for the time received (t2).

It is possible to reset the timer part at the time of transmission, and to use the timer value of the timer part at the receiving time (t2) as the duration of transmission.

The measurement method, including a detailed configuration of each device, is next explained in further detail.

Figure 4 through Figure 6 are diagrams showing, respectively, the retransmission controller 24, the wireless base station controller 23 and the wireless base station 22.

·"Retransmission Controller 24"

The retransmission controller 24 shown in Figure 4 comprises a first interface part 25 for performing communication with the wireless base station controller 23, a second interface part 26 for controlling communication with the network, a control part 27 which controls each part, a control message processor 30, which processes control messages transmitted to the wireless control station 22, a timer part 31 for measuring transmission time, and a memory part 29, which stores various types of data including transmission data.

Preferably, interface parts that perform transmission in accordance with an ATM (Asynchronous transmission mode) scheme can be used as the first and second interface parts. Of course, transmission can be performed in accordance with other systems.

It is also preferable that the control part 27 be one which performs control on a RLC (radio link control) layer regulated in a 3GPP mobile communication system, and, as shown in the figure, it is provided with a first retransmission function part 28 for performing retransmission control (first retransmission control) on the RLC layer with the mobile station 21.

Next, the operation is briefly explained.

The data (for example, variable-link packet data) obtained by terminal processing of a signal received from the network side by the second interface part 26 is input to the control part 27, and multiple signals (RLC PDU (Packet Data Units)) in a format such as that shown in Figure 8, for example, are formed by division into specified lengths.

·"RLC PDU Format"

The RLC PDU format is explained referring to Figure 8.

In the figure, the sequence numbers indicate PDU sequence numbers. The control part 27 attaches sequence numbers to each divided PDU and stores them in this region. The sequence number is used by the mobile station 21 to discover if a PDU is out of sequence, and if numbers out of sequence have occurred, an NACK signal is transmitted from the mobile station in order to perform the first retransmission control on the RLC layer.

Retransmission control is performed mainly by the first retransmission function part. Specifically, using the receipt of the NACK signal from the mobile station, the first retransmission function part 28 reads the RLC PDU stored in the memory part 29 (stored prior to transmission to the mobile station) from the memory part 29 and retransmits this to the mobile station via the first interface part 25.

P indicates a polling bit, which is a bit that determines whether or not to request the mobile station to report the status (e.g., the occurrence of a number out of sequence) in a PDU.

HE indicates the header expansion type.

E is an expansion bit and indicates whether data or a length identifier will follow next.

A length identifier indicates the data length stored in a payload.

A padding or status PDU is the region in which bits are inserted as a filler if the amount of data is insufficient for the PDU length and is used to report the PDU status.

The foregoing is the RLC PDU format. The controller 27 gathers multiple RLC PDUs, generates a signal in a format in accordance with the HS-DSCH FP (frame protocol) shown in Figure 9, and forwards them to the first interface part 25, for example, after conversion to an ATM cell, transmits them to the wireless base station controller 23.

·"Frame Configuration of HS-DSCH FP"

Here, the frame configuration of the HS-DSCH FP is explained in using Figure 9.

In Figure 9, "Header CRC" is the region in which the CRC calculation results having the following header part as the object of calculation are stored.

"FT" is the bit that distinguishes between data and control signal, and "Spare" indicates an open bit.

"CmCH-PI" indicates the priority of this frame.

"MAC PDU" is the length of each MAC PDU stored.

"Number of PDUs" indicates the total number of MAC PDUs stored.

"User buffer size" indicates the data buffer capacity.

PDU I through PDUn indicate each MAC PDU stored, and RLC PDU shown in Figure 8 may be stored unchanged.

"Payload CRC" indicates the region in which the CRC calculation results having a payload as the object of calculation are stored.

As explained above, the data received from the network is converted into multiple RLC PDUs with sequence numbers attached, and after the converted RLC PDUs are collected and stored in one frame of the HS-DSCH, they are transmitted from the first interface part 25.

In order to measure the transmission time, when creating the MAC PDUs, the control part 27 sets the polling bit with respect to at least one MAC PDU so that it will request the mobile station to report the PDU status (for example, the occurrence of numbers out of sequence), and in order to measure the time from the transmission of that MAC PDU until the receipt of the ACK signal from the mobile station, begins time measurement by storing the timer value of the timer part 31 in the memory part 29 (or resetting the timer).

·"Wireless base station controller 23"

Figure 5 shows the wireless base station controller (RNC: Radio Network Controller) 23, which can be made a simple relay device, but here is provided with a function for controlling the wireless base station 22 (e.g., wireless resource securing instruction, etc.).

In the figure, 32 indicates a first interface part, 33 a second interface part and 34 a relay control part.

The first interface part 32 and second interface part 33 can be made units which perform signal transmission compatible with an ATM scheme similar to the first interface part 25 of the retransmission controller 24.

Thus, the HS-DSCH frame obtained by the ATM terminal via the second interface part 33 is again converted to an ATM cell by the first interface part 32 and transmitted to the corresponding pathway (wireless base station).

·"Wireless base station 22"

Figure 6 shows the wireless base station 22 (BS: Base Station).

In the figure, 35 represents the wireless transceiver for performing transmission and receiving of wireless signals with the mobile station 21, 36 is the first interface part which performs terminal processing of signals from the wireless base station controller 32, 37 is a controller for performing MAC-hs processing, which performs control of each part and processing of the MAC layer (in particular, the MAC layer relating to HSDPA), which is a layer below the RLC layer, and 39 a memory part for storing transmission data for retransmission in order to perform retransmission control (second retransmission control) by means of the H-ARQ previously explained that is executed with the mobile station 21, and storing transmission data (MAC PDU) which indicates the sequence waiting status as data to be transmitted by the shared channel HS-PDSCH.

40 is a control message processor, which is a unit for performing transmission and receiving of inter-device control messages with the control message processor 30 of the retransmission controller 24.

41 represents a measuring part.

Next, the operation is explained.

First, the HS-DSCH frame received via the first interface part 36 is input to the control part 37.

The control part 37 then stores the MAC PDUs addressed to the mobile station contained in the HS-DSCH frame received in the memory part 39.

Then when it has been detected that the transmission of data to the mobile station via that HS-PDSCH which is a shared channel has become possible, the multiple MAC PDUs addressed to that mobile station are extracted in order from the memory part 39, and MAC-hs PDU containing multiple MAC PDUs is generated. The number of MAC PDUs extracted is selected so that it can be held within the transport block size determined by the CQI information, etc.

The MAC-hs PDU forms one transport block and constitutes the source of data transmitted via the HS-PDSCH to the mobile station 21.

·"Format of MAC-hs PDU"

Figure 10 shows the format of the MAC-hs PDU.

In the figure, VF represents the version flag, the queue ID represents the data sequence held in one MAC-hs PDU, and data sequences having the same queue ID are held in the MAC-hs PDU.

The TSN (Transmission Sequence Number) is the sequence number attached to the MAC-hs PDU, and even when transmission of the HS-PDSCH to the mobile station 21 is performed divided into multiple processes, the transport block can be rearranged in accordance with this sequence number.

The SIDi is information indicating each MAC PDU length stored.

The Ni information indicating the total number of MAC PDUs stored.

The Fi indicates the end of each header and padding indicates the bits inserted in order to fill in the gaps.

As explained above, in HSDPA, adaptable modulation control based on CQI information from the mobile station is performed by the wireless base station 22, and the transmittable data amounts varies according to the wireless environment (CQI information) between the wireless base station 22 and the mobile station 21.

Accordingly, the size of one MAC-hs PDU, i.e., the size of one transport block, is increased or reduced in accordance with the changes in the wireless environment.

In order to perform second retransmission control by H-ARQ control, the MAC-hs PDU generated in the control part 37 is stored in the memory part 39 and is also transmitted from the wireless transceiver 35 via the HS-PDSCH.

As explained above, before transmission of the HS-PDSCH, transmission warning (notification) is given to the mobile station subject to transmission of the HS-PDSCH via the HS-SCCH. By receiving the receiving results (NACK signal) of the HS-PDSCH from the mobile station via the HS-DPCCH, the second retransmission function part 38 (a retransmission function part compatible with H-ARQ) of the control part 47 reads from the memory part 39 the MAC-hs PDU transmission of which has failed, provides this to the wireless transceiver 35 and again performs retransmission.

Of course, when the receiving result of HS-PDSCH (ACK signal) is received from the mobile station via the HS-DPCCH, since retransmission control is unnecessary, a control part 37 performs control so as to read the unsent MAC PDUs stored in the memory part 39 to be transmitted as the next new transport block and create and transmit a new MAC-hs PDU.

·"Mobile station 21 "

Next, the constitution and operation of the mobile station are explained.

The constitution of the mobile station 21 is shown in Figure 7. In the figure, 42 represents the wireless transceiver for performing wireless communication with the wireless transceiver 35 of the wireless base station 22, and 43 represents the input/output part which inputs data and the like and outputs received sounds and data.

44 represents a control part, which controls each part, performs first retransmission control, and performs retransmission control of receiving results (ACK signals and NACK signals) in accordance with second retransmission control.

45 and 46 are process function parts belonging to the control part 44. 45 represents the MAC-hs processing function part and 46 represents the RLC layer process function part 46, which performs processing in a higher layer.

The MAC-hs processing function part 45, when a CRC error is detected with respect to the transport block received, generates an NACK signal, and when no CRC error is detected generates an ACK signal. It also performs a reordering process (reordering) based on the CSN contained in the MAC-hs PDU obtained by decoding, and transfers data after reordering to the RLC layer processing function part 46, which performs upper layer processing.

The RLC layer processing function part 46 determines whether there is any disorder in the number sequence contained in the MAC PDU and determines what is out of sequence.

47 indicates a memory part, which stores various types of required data, and is used for temporary storage of data that should realize the H-ARQ but has become a receiving error.

Accordingly, the mobile station 21, when notification is given by the HS-SCCH that transmission of data will be made to the mobile station via the HS-PDSCH, the mobile station receives a subframe of the HS-PDSCH after 2 slots and modulates and decodes (turbo-decodes) it. Thereby decoding result is obtained, it is determined whether the receiving is successful or not by CRC calculation using a CRC bit, and if not, the received data is stored in the memory part 47, and an NACK signal is transmitted to the wireless base station 22 via the HS-DPCCH based on control by the MAC-hs processing function part 45.

Next, when retransmission is performed by the wireless base station 22, after the stored data in the memory part 47 and retransmitted data have been combined, they are decoded (turbo-decoded), and a CRC check is again performed on the decoded data.

If deemed permissible by the CRC check, the MAC-hs processing function part 45 performs control so that an ACK signal is transmitted to the wireless base station 22 via the HS-DPCCH.

Next, the MAC-hs processing function part 45 performs a reordering process (reordering) based on the TSN contained in the MAC-hs PDU obtained by decoding, and transfers the MAC PDU (RLC PDU) contained in the transport block after reordering to the upper-layer RLC processing function part 46.

The RLC processing function part 46 performs reordering using sequence numbers contained in the MAC PDU (RLC PDU), detects numbers out of sequence, and performs a polling bit check.

Here, if a number out of sequence has been detected, the RLC processing function part of the mobile station 21 transmits an NACK signal for first retransmission control to the retransmission controller 24 via an independently established individual physical channel (DPCH).

If the polling bit has been set so as to request the PDU status (e.g., occurrence of a number out of sequence, etc.), the mobile station 21 checks the occurrence status of sequence errors and transmits via separately established independent physical channel (DPCH) an ACK signal if there is no sequence error or transmits an NACK signal if a sequence error has occurred.

The ACK signal and the NACK signal which is controlled by the RLC process function part 46 of the mobile station 21 is transmitted to the retransmission controller 24 via the wireless base station 22 and wireless base station controller 23.

The control part 27 of the retransmission controller 24 upon receiving an NACK signal for first retransmission control, reads the retransmission data (HS-DSCH frame) to be retransmitted from the memory part 29 under the retransmission control by the first retransmission function part 28 and performs retransmission of the read data.

If an ACK signal is received, in order to measure the transmission time (RTT: round-trip time), the control part 27 of the retransmission controller 34 reads the count value (t2) in the timer part 31 when receiving of the ACK signal is detected and obtains the transmission time.

Specifically, the transmission time is calculated by obtaining the elapsed time (t2-t1) based on the timer value of the timer part at the transmission time (t1) and the timer value of the timer part (t2) upon receiving.

It is possible to reset the timer part at the time of transmission, and to use the timer value of the timer part at the receiving time (t2) as the transmission time.

By performing the process described above, it is possible to measure the time required for data transmission between the retransmission controller and the mobile station.

In particular, since it is possible to measure the transmission time of the data itself transmitted via the HS-PDSCH, the delay time due to retransmission control (second retransmission control) between the mobile station and the wireless base station is also reflected, and the procession of the measured transmission time is high.

(b) Explanation of Embodiment 2

In Embodiment 1, since the mobile station transmits an ACK signal using DPCH in order to measure the transmission time, sometimes interference within the system can increase due to signal transmission.

Moreover, since it is sometimes necessary to transmit receiving results used in first retransmission control to many mobile stations, in order to perform transmission time measurement, the processing load is placed on the mobile stations.

For this reason, in Embodiment 2, this problem is further considered.

· Plan 1

In Proposal 1, information (a receiving result signal) transmitted by the mobile station for second retransmission control is used.

The control part 38, when transmitting a transport block via the HS-PDSCH to a mobile station 21, obtains a plurality of MAC PDUs when the memory part 39, creates a MAC-hs PDU and provides this to the wireless transceiver 35.

The receiving results (ACK signal or NACK signal) with respect to the transport block transmitted via the HS-PDSCH is transmitted from the mobile station via the HS-DPCCH.

These receiving results are received by the wireless transceiver 35 and provided to the control part 37. The retransmission function part 38 of the control part 37 performs retransmission of the transport block upon receiving an NACK signal relating to second retransmission control, and transmits the next transport block upon receiving an ACK signal relating to second retransmission control.

Accordingly, the measuring part 41 obtains the transmission time in the wireless interval is obtained by measuring the time interval (T4-T3) from transmission via the HS-PDSCH (time T3) until the reception of ACK signal relating to second retransmission control (time T4).

However, when the mobile station 21 actually confirms that no CRC error exists in the decoding results of the HS-PDSCH, it transmits an ACK signal and performs reordering based on the TSN according to the MAC-hs processing function part 45, then transfers the results to the RLC layer processing function part 46. The RLC layer processing function part 46 performs the process of detecting numbers missing from the sequence by performing reordering based on the sequence numbers, and an ACK signal (NACK signal) relating to first transmission control is transmitted.

Accordingly, there is a possibility of deviation of the timing of ACK signal reception relating to second retransmission control in the wireless interval and the timing of ACK signal reception relating to first retransmission control addressed to the retransmission confroller 24 via the DPCH, or, strictly speaking, process timing, due to differences in the transmission timing.

However, since the time required for second retransmission control in the wireless interval is controlling as the transmission time, this deviation can be ignored, or the error time due to processing time and the like can be estimated by prior measurement or the like, and can be dealt with by adding this error time when measurement is performed by the measuring part 41.

For example, when a first signal has been transmitted from the retransmission control device 24 to the wireless base station 22, the wireless base station 22 which has received this first signal performs measurement using measuring part 41 in accordance with Plan 1, and when it is confirmed that an ACK signal relating to second retransmission control has been received based on this measurement, a second signal (preferably a signal including error time) is transmitted, and by receiving this second signal by the retransmission controller 24, the controller 27 is able to obtain the time interval from the transmission of the first signal until the reception of the second signal as the transmission time (round-trip time) between the mobile station 21 and retransmission controller 24.

If error time is contained in the second signal, by adding this time it is possible to perform correction in accordance with the processing time, and if it is not contained in the second signal, the retransmission controller 24 can perform correction by storing the error time and adding it in the same way.

By the means described above, it is possible to obtain the transmission time between the retransmission controller 24 and mobile station 21 while suppressing interference in the wireless environment between the mobile station 21 and wireless base station 22 and increase in the processing load of the mobile station.

When the first signal is received together with the MAC PDU to be transmitted to the mobile station 21 from the wireless base station 22, if, for example, the first signal is contained in an empty region of the HS-DSCH frame, measurement of the transmission time using Plan 1 can be performed smoothly by receiving an ACK signal relating to second retransmission control with respect to the MAC PDU contained in a frame.

However, when the first signal is transmitted independently from an MAC PDU, if an MAC PDU addressed to the mobile station happens to be held as the object of transmission time measurement in the wireless base station, measurement can be performed by using the ACK signal relating to second retransmission control with respect to that MAC PDU, but there is also a possibility that the MAC PDU to be transmitted will not exist in the wireless base station 22 (memory part 39).

In this case, it is desirable that fresh measurement results be stored in the memory part 39 so that measurement of transmission time between the mobile station 21 and retransmission controller 24 using an ACK signal relating to second retransmission control according to Plan 1 is performed regularly (in advance) by the measuring part 41.

In the control part 37 when receiving the first signal reads the newly stored measurement results from the memory part 39, and includes and transmits them in the second signal. Periodic reading and transmission to the retransmission controller 24 may also be performed.

The retransmission controller 24 upon receiving the second signal seeks the time from the transmission of the first signal until the receiving of the second signal based on the count value in the timer part 31, and by adding the measurement results contained in the second signal to this value is able to obtain the transmission time between the mobile station 21 and retransmission controller 24.

As stated above, by using the receiving results (ACK signal) transmitted for second retransmission control (H-ARQ) in the wireless interval, it becomes unnecessary to transmit a special ACK signal to the retransmission controller 24 in order to measure the transmission time.

If there is not much change in the transmission time between the retransmission controller 24 and wireless base station 22 or in similar cases, it is possible to obtain the transmission time between the retransmission controller 24 and mobile station 21 by adding a specified time (obtaining the transmission time between the retransmission controller and wireless base station device in advance by actual measurement) to the measurement results in the measuring part 41.
In this case, it is sufficient to have a function which transmits (e.g., periodically transmits) measurement results obtained by the measuring part 41 from the wireless base station 22 to the retransmission controller 24, and transmission of a special signal (e.g., a first signal) when they retransmission controller 24 can be omitted, transmitting only a second signal to the retransmission controller 24 specified opportunities.

· Plan 2

According to Plan 2, transmission time is estimated taking into consideration CQI information received periodically from each mobile station 21 and the data quantity in the memory part 39.
While receiving HSDPA service it is necessary for the mobile station 21 to transmit CQI information periodically via an HS-DPCCH.
Here, the control part 37 of the wireless base station 22 uses this CQI information not only in adaptive modulation control in the wireless transceiver 35 but also in estimation of the transmission time.
The CQI information is information created by specifying a corresponding CQI value based on a received SIR, etc., of the CPICH through which the wireless base station 22 transmits. The wireless base station 22 switches to a transmission scheme having a higher transmission speed or switches to a transmission scheme having a lower transmission speed based on the CQI value.
Accordingly, when the measuring part 41 stores measurement results according to Plan 1 in the memory part 39 or transmits measurement results stored in the memory part 39 as a second signal, the time required when all of the data (MAC PDU) stored in the memory part 39 is transmitted at a transmission speed determined according to CQI information received from each mobile station is calculated, and this time is added to the measurement results obtained in Plan 1.
This is because it is more desirable to take into consideration data the transmission of which has been suspended in the memory part 39, since the channel used by HSDPA is a shared channel.
By means of the foregoing, it is possible to obtain the transmission time (round-trip time) between the retransmission controller 24 and mobile station 21. While suppressing increases in interference in the wireless environment between the mobile station 21 in the wireless base station 22.

(c) Explanation of Embodiment 3

In Embodiment 3, optimization of the first signal and the second signal is achieved.
As explained above, when a specified bit is set in the polling bit in the RLC PDU, and an ACK signal relating to first retransmission control is received from the RLC processing function part 46 of the mobile station, it is necessary for a PDU to exist that is to be transmitted to the mobile station subject to measurement of transmission time, and the measurement time is limited.
Therefore, in this embodiment, a control message is used which is already defined between the retransmission controller 24 and wireless base station 22.
The transmission and receiving of the control message between the retransmission controller 24 and wireless base station 22 can be performed by being control message processor 30 in the retransmission controller 24 and the control message processor 40 in the wireless base station 22. The control message is a message that can be transmitted in place of the HS-DSCH frame.
Figures 11 and 12 show two messages defined as control messages.

· "Capacity request message"

Figure 11 shows a capacity request message.
The frame CRC is a region which stores CRC calculation results having the portion from FT up to spare extension as the object of calculation, where FT is a bit indicating whether this is data or a control signal.
The frame type is a bit which indicates whether the message is a capacity request message or capacity allocation message.
CmCH-PI indicates the priority of this message.
Data buffer quantity indicates the data quantity requiring allocation by the memory part 39.
Spare extension is a spare bit region.
Accordingly, in this embodiment, the retransmission controller 24 when performing measurement of the transmission time creates this capacity request message as a first signal and performs control by sending it to the wireless base station 22.

However, in spare extension, the timer value in the timer part 31 is stored. In this case, for example, the timer part 31 continues the counter in a range of 1-255 in the 2 ms cycles.

Here, assuming that the timer value was 10, that 10 is stored in the spare extension region and transmitted.

This message is transmitted via the wireless base station controller 23 for the wireless base station 22, and the control part 37 of the wireless base station 22 upon detecting that it is a control message, forwards this message to the control message processor 40.

The control message processor 40 in response generates a capacity allocation message, which it transmits to the retransmission controller 24.

·"Capacity allocation message"

Figure 12 show is a capacity allocation message.

In the figure, the frame CRC is a region which stores CRC calculation results having the portion from FT up to spare extension as the object of calculation, where FT is a bit indicating whether this is data or a control signal.

The frame type is a bit which indicates whether the message is a capacity request message or capacity allocation message.

CmCH-PI indicates the priority of this message.

Max MAC PDU length indicates the maximum transmittable MAC PDU length.

HS-DSCH credit indicates the transmittable MAC PDU number between intervals.

HS-DSCH interval indicates the effective interval of the credit.

HS-DSCH repetition interval indicates the effective number of intervals.

Spare extension is the spare bit region.

The retransmission controller 24 performs transmission of a number of MAC PDUs no greater than the number defined by the credit number within the interval (time width) indicated by the interval.

In addition, in this embodiment the following value is written into the spare extension.

When the timer value stored in the spare extension of a capacity request is 10, the value obtained by subtracting the measured measurement value is obtained (here, the measurement value is 4, so 10 - 4 = 6) by means of the measuring part 41 in accordance with Plan 1 or Plan 2 indicated in Embodiment 2.

This value is then stored in the spare extension of the capacity allocation message and is transmitted. If the time scale of the measurement value matches the timer value in the timer part 31, no special calculation is necessary, but if it does not match, calculation should be performed.

The transmitted capacity allocation message is received by the retransmission controller 24 and provided to the control message processor 30 by the control part 27.

The control message processor 30 extracts the value (6) stored in the spare extension of the capacity allocation message received, subtracts the received value (6) from the present timer value (30) referring to the timer value (here, 30) in the timer part 31, and obtains the transmission time (30 - 6 = 24).

By this means, measurement can be performed even where there is no PDU to be transmitted to the mobile station that is the subject of measurement of transmission time.

Preferably, the difference in processing time within each node due to differences between the control signal and data (which can be distinguished by F) is considered.

Each node (wireless base station controller and wireless base station) generally gives higher priority to processing high-priority control signals over data.

By this means, processing, transmission and other processing are performed at a higher speed for capacity request messages and capacity allocation messages as control signals than for HS-DSCH frames containing MAC PDUs, which are normal data, having the merit of allowing measurement of the transmission time to be performed quickly.

Nevertheless, since errors in the processing time in accordance with the level of priority (processing time to differences occurring due to the fact that these message is having a high priority are given higher priority in processing than HS-DSCH frames containing MAC PDUs), when the round-trip is measured (estimated) with respect to HS-DSCH frames, it is desirable to compensate for (add) this processing time difference.

If the retransmission controller 24 has stored this error time, it is desirable to correct the measured transmission time using this stored error time (adding the error time to the measured transmission time).

If the error time is stored by each node (wireless base station controller 23 and wireless base station 22), each node is to subtract the error time stored from the value stored in the extension spare upon receiving a message.

By this means, it is desirable that the error time caused by processing time in accordance with priority be corrected in the transmission time finally calculated by the retransmission controller 24.

(d) Explanation of Embodiment 4

In Embodiment 4, the transmission time between the mobile station 21 and retransmission controller 24 obtained in accordance with Embodiment 1 through 3, is used in transmission control in the retransmission controller 24.

As explained above, in the retransmission controller 24, the number of transmittable MAC PDUs within a specified timeframe is limited depending upon the capacity allocation message, the like, so it is necessary to take consideration so that data will not overflow in the wireless base station 22 caused by reception error of the mobile station 21.

Here, WINDOW control is used.

"WINDOW control" means limitation to within the number (WINDOW size) of RLC PDUs that can be transmitted during the interval from the transmission of RLC PDU until an ACK signal relating to first retransmission control from the RLC processing function part 46 of the mobile station 21 is received.

The retransmission controller 24 sets the RLC PDU polling bit to "response required" when the date at to be transmitted next no longer exists or after a specified interval has elapsed, and performs control so that the receiving result (ACK signal, NACK signal) is received from the RLC processing function part 46 of the mobile station 21.

By this means, overflow of data is effectively prevented, but since the normal window size is fixed, the transmission rate r is limited to:

$$r = (\text{WINDOW size}) \times (\text{RLC PDU length}) \div T \quad \ldots (\text{Equation 1})$$

Here, T indicates the time from transmission of the RLC PDU after the setting of the RLC PDU polling bit to "response required" until an ACK signal is received as a receiving result relating to first retransmission control from the RLC processing function part 46 of the mobile station 21, and corresponds to the RTT (round-trip time).

For example, when the WINDOW size is made 100, the RLC PDU length 82 bytes, and the RTP 0.02 s, the upper limit of the transmission rate becomes 3.28 Mbps.

Accordingly, since the WINDOW size is fixed, the maximum transmission rate is reduced in accordance with changes in T as a result of WINDOW control, and is restricted to a lower transmission rate than the maximum transition rate permitted by the capacity allocation message.

Thus, in this embodiment, treating the transmission time between the retransmission controller 24 in mobile station 21 obtained by the previous embodiment as T, the desired transmission rate R, the known RLC PDU length and the T thereof, the WINDOW size can be obtained from:

$$R = (\text{WINDOW size}) \times (\text{known RLC PDU length}) \div (\text{measured RTT})$$

and in WINDOW control, control (adaptive control) that varies according to the WINDOW size obtained is performed by the control part 27.

Of course, it is preferable to perform control so as to obtain measurement results for the transmission time in a sufficiently shorter interval than the interval (X) in which the RLC PDU polling bit is set at "response required," and to perform updating at shorter intervals (periodically) than this interval (X).

Even more preferably, by making R the permissible maximum transmission rate by means of the wireless these station 22 (e.g., the maximum transmission rate limited by capacity allocation) the maximum transmission rate within the permissible range can be obtained.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

Embodiments of the present invention may be implemented in hardware, or as software modules running on one or more processors, or on a combination thereof. The invention may also be embodied as one or more device or apparatus programs (computer programs and computer program products) for carrying out part or all of any of the methods described herein. Such computer programs embodying the present invention may be stored on computer-readable media, or could, for example, be in the form of one or more signals. Such signals may be data signals downloadable from an Internet website, or provided on a carrier signal, or in any other form.

## Claims

1. A mobile communication system which is HSDPA-compatible and comprises:

   a mobile station;
   a wireless base station;
   a retransmission controller operable to transmit data units to the mobile station via the wireless base station; and
   a control part, operable to utilize transmission time, which is relating to the wireless interval between the mobile station and wireless base station, obtained in accordance with the reception of an ACK signal transmitted by said mobile station under H-ARQ control to obtain the round-trip time with respect to transmission between said mobile station and said retransmission controller.

2. The mobile communication system according to Claim 1, wherein:

   retransmission control on an RLC layer is applied to the transmission between said mobile station and said retransmission controller, and
   the control part is further operable to perform variable control of setting of a number of data units for which transmission is permitted from the transmission of data units from the retransmission controller until the receipt of an ACK signal transmitted from the mobile station concerning the retransmission control on the RLC layer, based on the round-trip time that has been obtained.

3. A transmission time measurement method to obtain round-trip time relating to transmission between a mobile station and a retransmission controller in a mobile communication system which is HSDPA-compatible and comprises a mobile station, a wireless base station and a retransmission controller which transmits data units to said mobile station via said wireless base station, said transmission time measurement method comprising:

   a step whereby the transmission time, in the wireless interval between said mobile station and said wireless base station, obtained by the receipt of an ACK signal transmitted by said mobile station under H-ARQ, and
   a step whereby the round-trip time is calculated using the transmission time in said wireless interval.

4. A transmission time measurement method comprising:

   transmitting data from a retransmission controller to a mobile station via a wireless base station;
   transmitting receiving result indicating that the data could be received from the mobile station;
   receiving the receiving result at the retransmission controller; and
   calculating a time required from the transmission of the data until the receipt of the receiving results using a timer function in the retransmission controller.

5. The transmission time measurement method according to claim 4, further comprising:

   variably controlling the number of data units of which transmission is permitted in the interval from the transmission of certain data until the receipt of receiving result indicating that the certain data could be received from the mobile device with respect to the certain data, based on the calculated time.

6. A mobile communication system comprising:

   a mobile station having a control part operable to control transmission of receiving result that indicate that data could be received;
   a wireless base station; and
   a retransmission controller operable to transmit data to the mobile station via the wireless base station, and having a clock unit operable to measure a time from transmission of data until receipt of the receiving result.

7. A mobile communication system comprising:

   a mobile station;
   a wireless base station; and
   a retransmission controller operable to transmit data to the mobile station via the wireless base station based on a first retransmission control;

wherein the wireless base station comprises:

a second retransmission function part operable to perform a second retransmission control with respect to the data on a lower layer than the first retransmission control, and
a measuring part operable to measure a transmission time with respect to a wireless interval between the mobile station and the wireless base station by receiving receiving result indicating that data could be received from the mobile station relating to the second retransmission control.

**8.** The mobile communication system according to Claim 7, wherein the wireless base station further comprises:

a control part operable to correct the transmission time by adding a processing time that includes a rearrangement time to the transmission time measured by the measuring part.

**9.** The mobile communication system according to Claim 7 or 8, wherein the measuring part is further operable to perform correction whereby a time required when data stored in the memory part is transmitted to each mobile station at each transmission rate calculated based on CQI information from each mobile station is calculated and added to the measurement results.

**10.** The mobile communication system according to Claim 7, 8 or 9, wherein the wireless base station further comprises:

a memory part operable to store the transmission time that has been measured by the measuring part.

**11.** The mobile communication system according to Claim 10, wherein:

the memory part is included in the wireless base station, and
the retransmission controller is provided with a control message processing part operable to receive a capacity allocation message that includes information relating to the transmission time stored in the memory part by transmitting a capacity request message.

**12.** The mobile communication system according to Claim 11, wherein:

priorities of the capacity request message and the capacity allocation message are set so as to be the same as a priority of the data.

**13.** The mobile communication system according to Claim 11, wherein:

priorities of the capacity request message and the capacity allocation message are set so as to be higher priority than that of the data; and
a control part is provided which is operable to obtain the transmission time between the mobile station and the retransmission controller by using the information relating to the transmission time, transmission time of the capacity request message and the capacity allocation message and a processing time difference created due to differences in the priority.

**14.** A mobile communication system comprising:

a mobile station;
a wireless base station; and
a retransmission controller operable to transmit data to the mobile station via the wireless base station based on a first retransmission control;
wherein the wireless base station comprises:

a second retransmission function part operable to perform second retransmission control with respect to the data on a lower layer than the first retransmission control, and
a control part operable to perform control whereby a second signal is transmitted to the retransmission controller, when receiving receiving result, relating to the second retransmission control and indicating data could be received, transmitted from the mobile station with respect to the data that has been transmitted to the mobile station after receiving a first signal from the retransmission controller.

**15.** The mobile communication system according to Claim 14, wherein:

the first signal is contained in the data.

**16.** The mobile communication system according to Claim 14 or 15, wherein:

the wireless base station comprises a memory part operable to store the data received from the retransmission controller, and
the control part is further operable to, upon receiving the first signal, search for a data addressed to the mobile station from data stored in the memory part, and the receiving result relates to the searched data.

**17.** A mobile communication system comprising:

a mobile station;
a wireless base station;
a retransmission controller that transmits data to the mobile station via the wireless base station based on a first retransmission control; and
a control part operable to measure or estimate a time from transmission of a data subject of the first retransmission control from the retransmission controller to the mobile station, up to the receipt by the retransmission controller of receiving results transmitted from the mobile station for the first retransmission control and indicating that the data could be received, and further operable to variably control a number of data units that can be transmitted by the retransmission controller during the interval from the transmission of data from the retransmission controller to the mobile station up to the receipt of receiving result indicating that such the data could be received by the retransmission controller, based on the measured or estimated time.

**18.** The mobile communication system according to Claim 17, wherein the control part is further operable to perform the variable control by setting, based on the time, a number of data units that can secure a highest permissible transmission rate, notification of which has been provided by the wireless base station.

Fig. 1

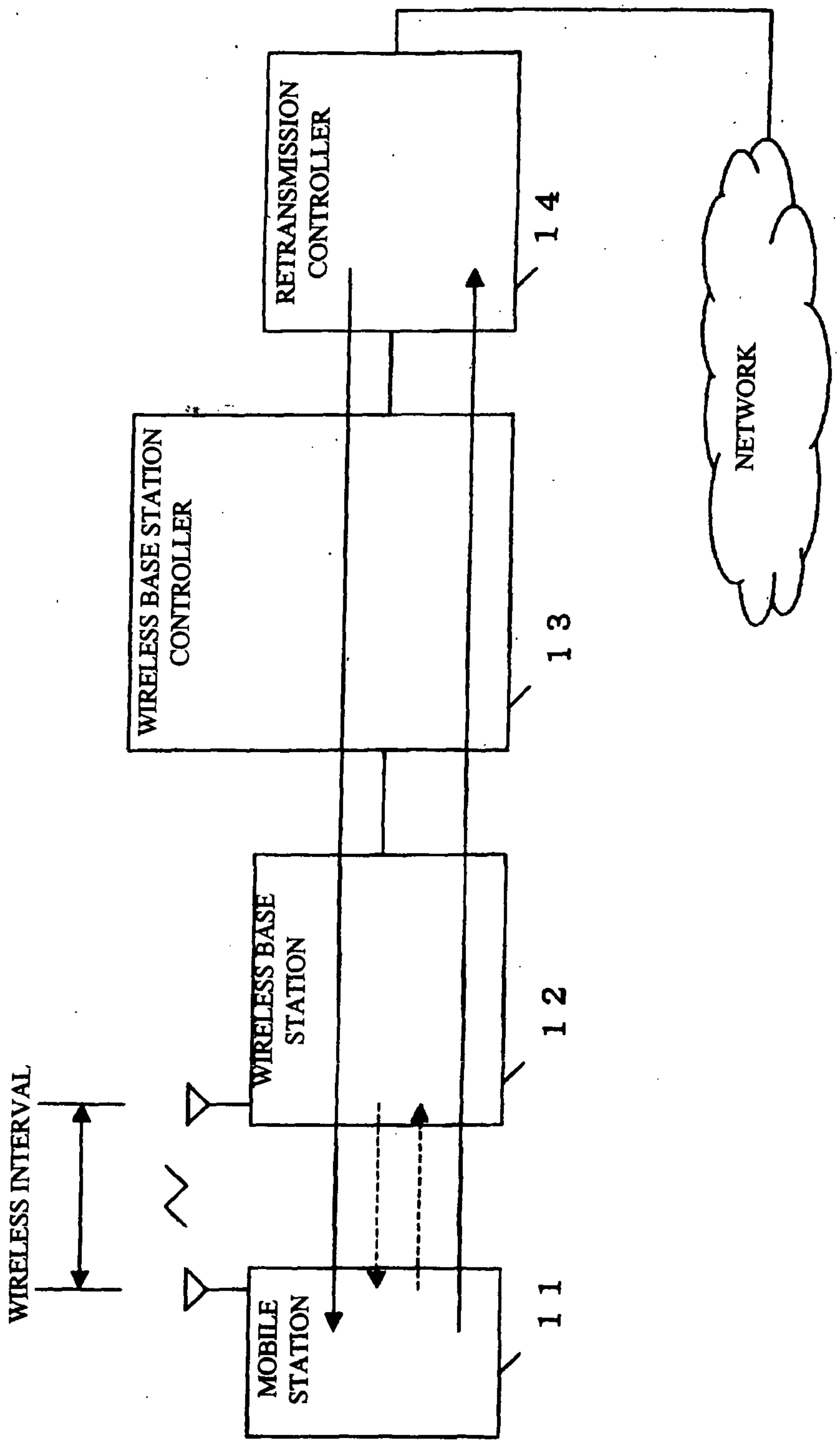
RETRANSMISSION CONTROLLER
14
WIRELESS BASE STATION CONTROLLER
13
WIRELESS BASE STATION
12
MOBILE STATION
11
WIRELESS INTERVAL
NETWORK

Fig. 2

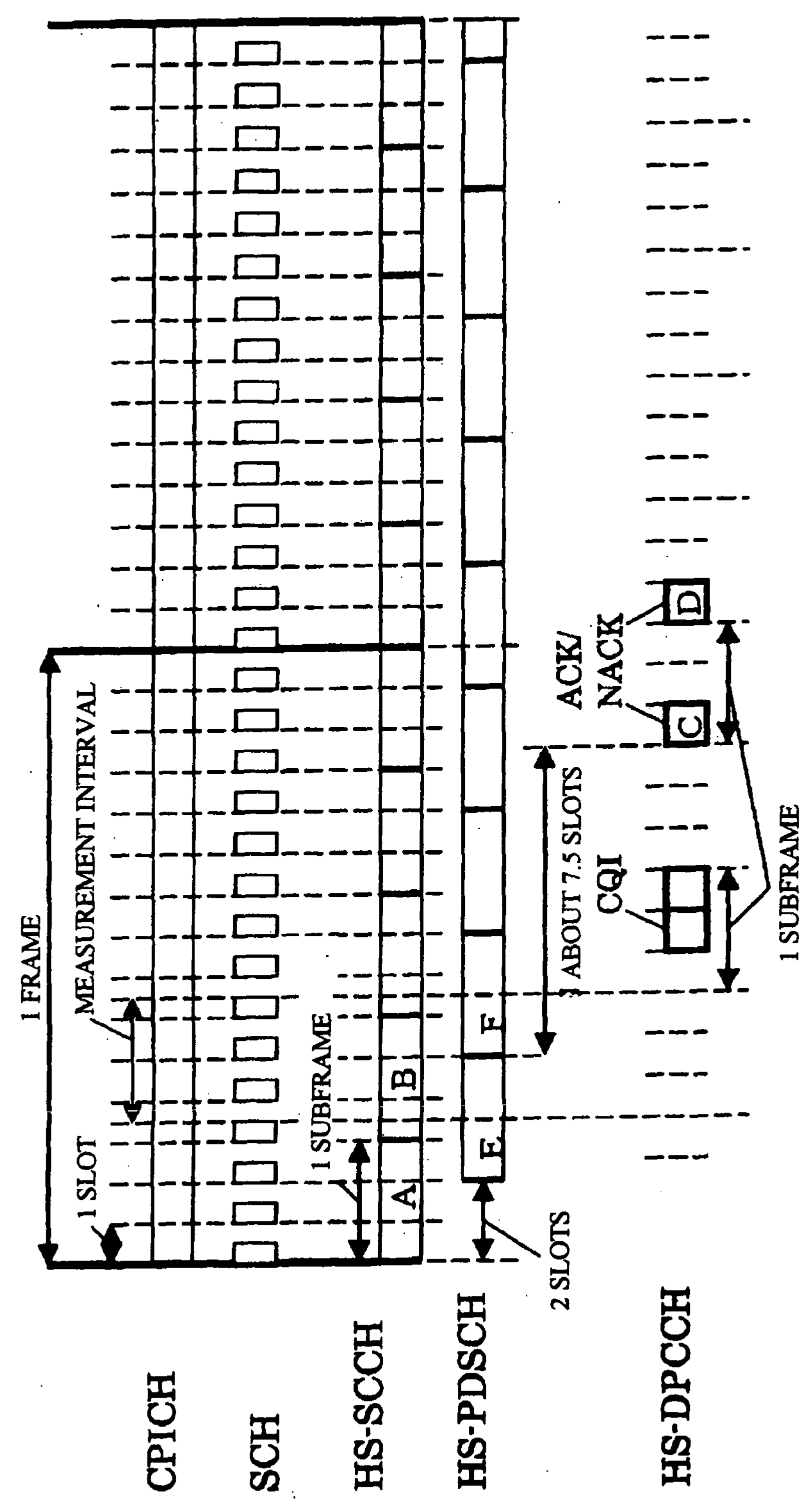
CPICH
SCH
HS-SCCH
HS-PDSCH
HS-DPCCH
1 FRAME
MEASUREMENT INTERVAL
1 SLOT
1 SUBFRAME
A
B
E
F
2 SLOTS
ABOUT 7.5 SLOTS
CQI
ACK/
NACK
C
D
1 SUBFRAME

Fig. 3

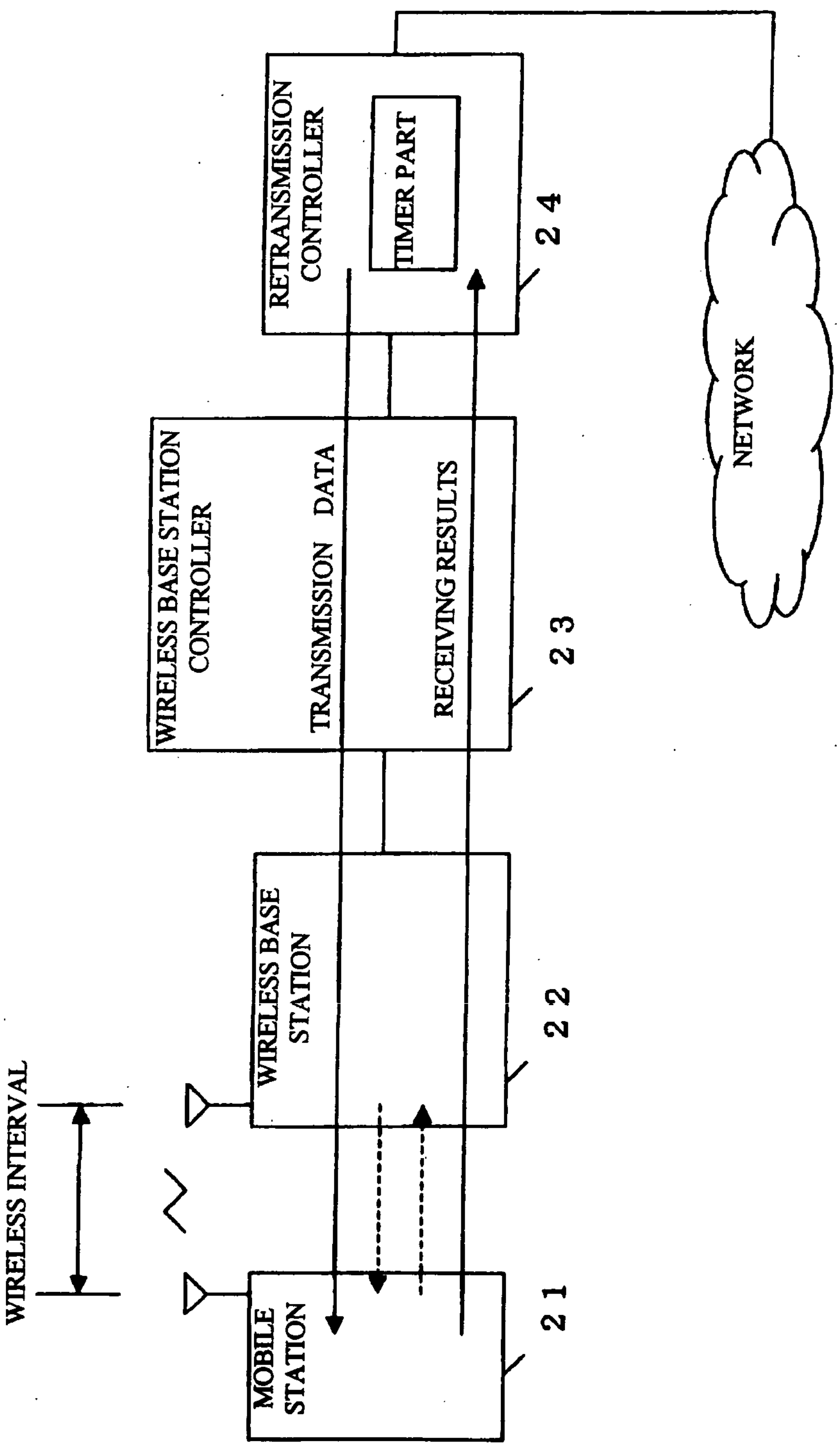
RETRANSMISSION CONTROLLER
TIMER PART
24
WIRELESS BASE STATION CONTROLLER
TRANSMISSION DATA
RECEIVING RESULTS
23
NETWORK
WIRELESS BASE STATION
22
WIRELESS INTERVAL
MOBILE STATION
21

Fig. 4

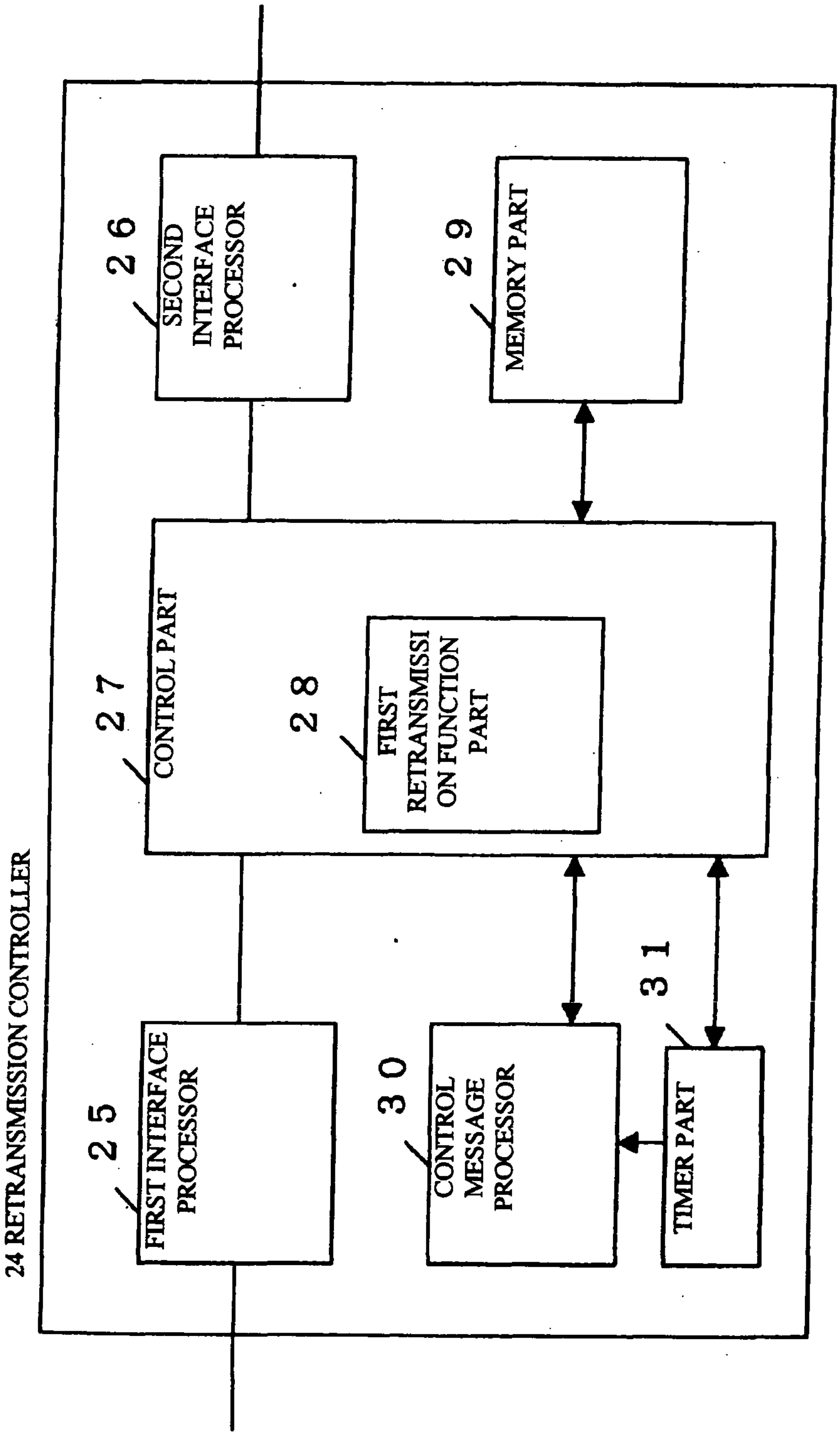
24 RETRANSMISSION CONTROLLER
25
FIRST INTERFACE PROCESSOR
26
SECOND INTERFACE PROCESSOR
27
CONTROL PART
28
FIRST RETRANSMISSION FUNCTION PART
29
MEMORY PART
30
CONTROL MESSAGE PROCESSOR
31
TIMER PART

Fig. 5

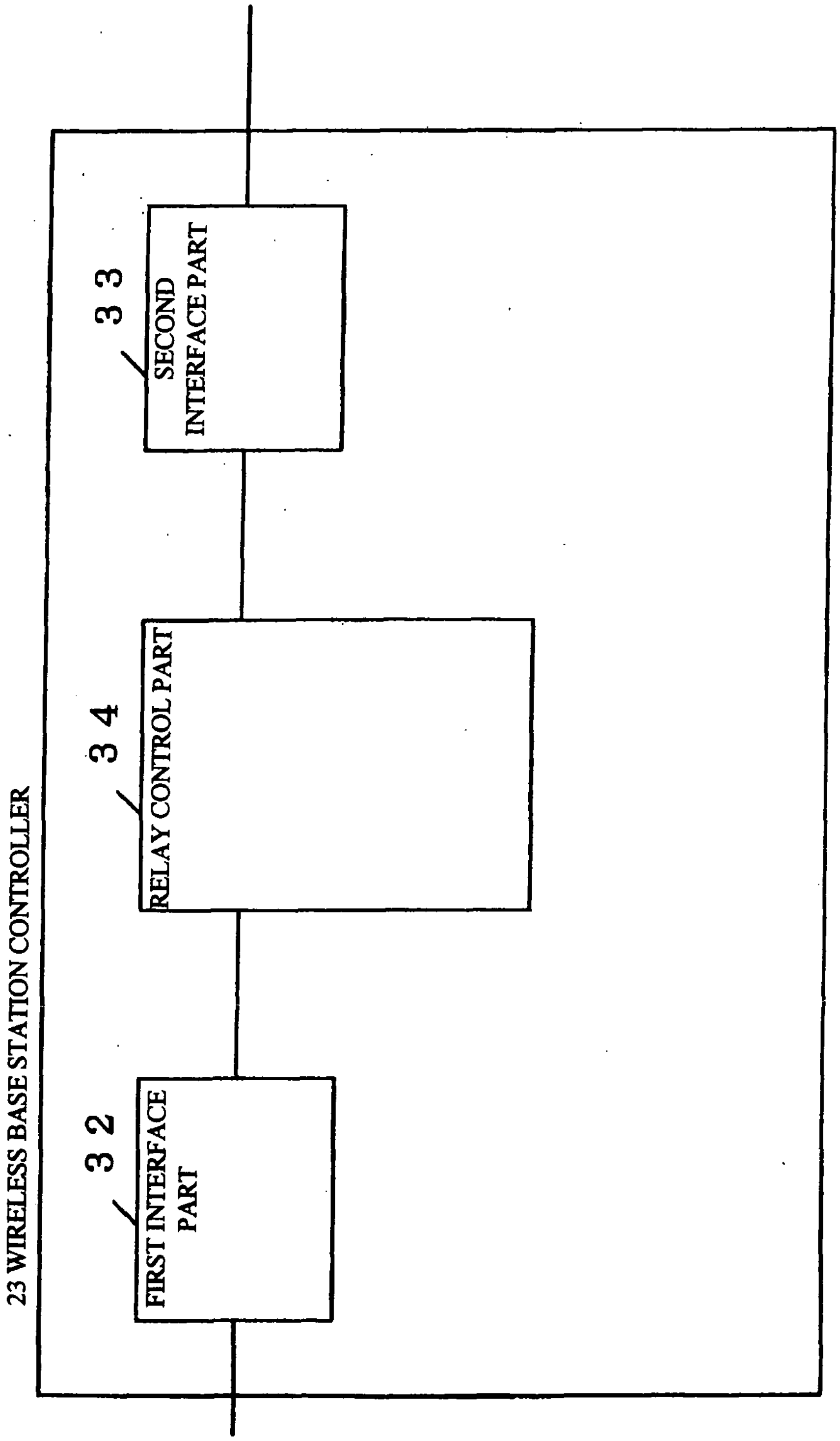
23 WIRELESS BASE STATION CONTROLLER
32
FIRST INTERFACE PART
34
RELAY CONTROL PART
33
SECOND INTERFACE PART

Fig. 6

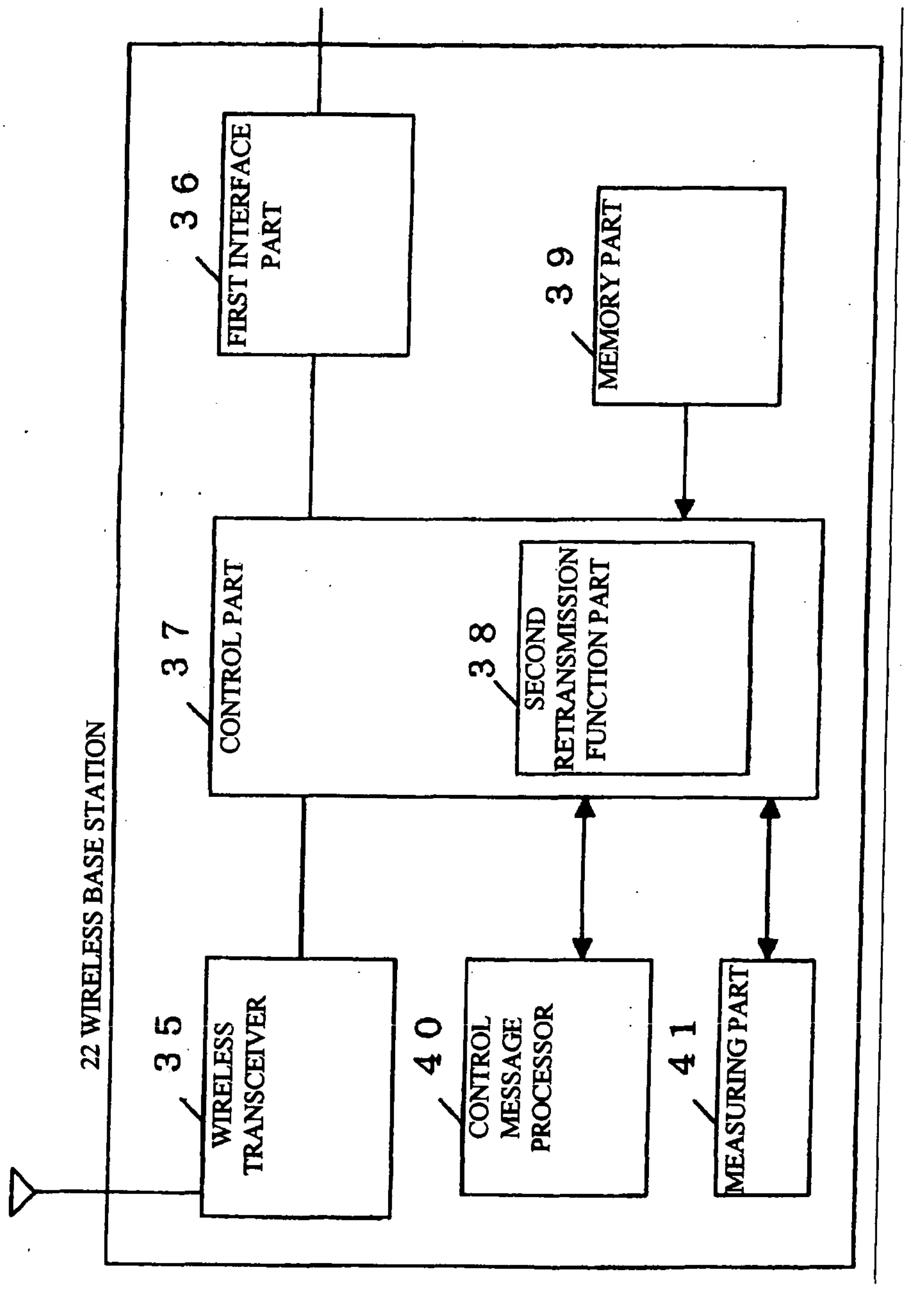
22 WIRELESS BASE STATION
35
WIRELESS TRANSCEIVER
36
FIRST INTERFACE PART
37
CONTROL PART
38
SECOND RETRANSMISSION FUNCTION PART
39
MEMORY PART
40
CONTROL MESSAGE PROCESSOR
41
MEASURING PART

Fig. 7

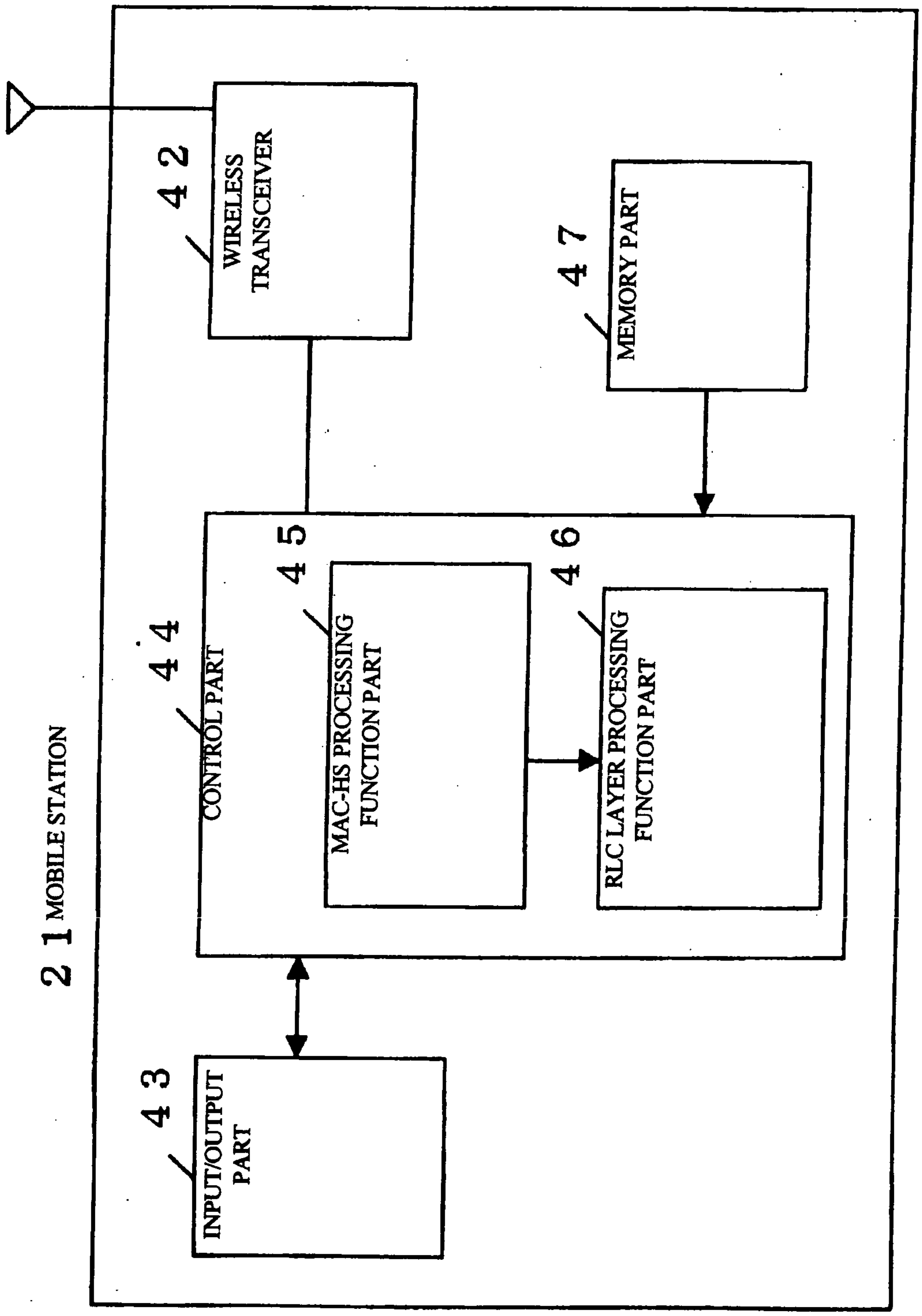
21 MOBILE STATION
42
WIRELESS TRANSCEIVER
47
MEMORY PART
44
CONTROL PART
45
MAC-HS PROCESSING FUNCTION PART
46
RLC LAYER PROCESSING FUNCTION PART
43
INPUT/OUTPUT PART

Fig. 8

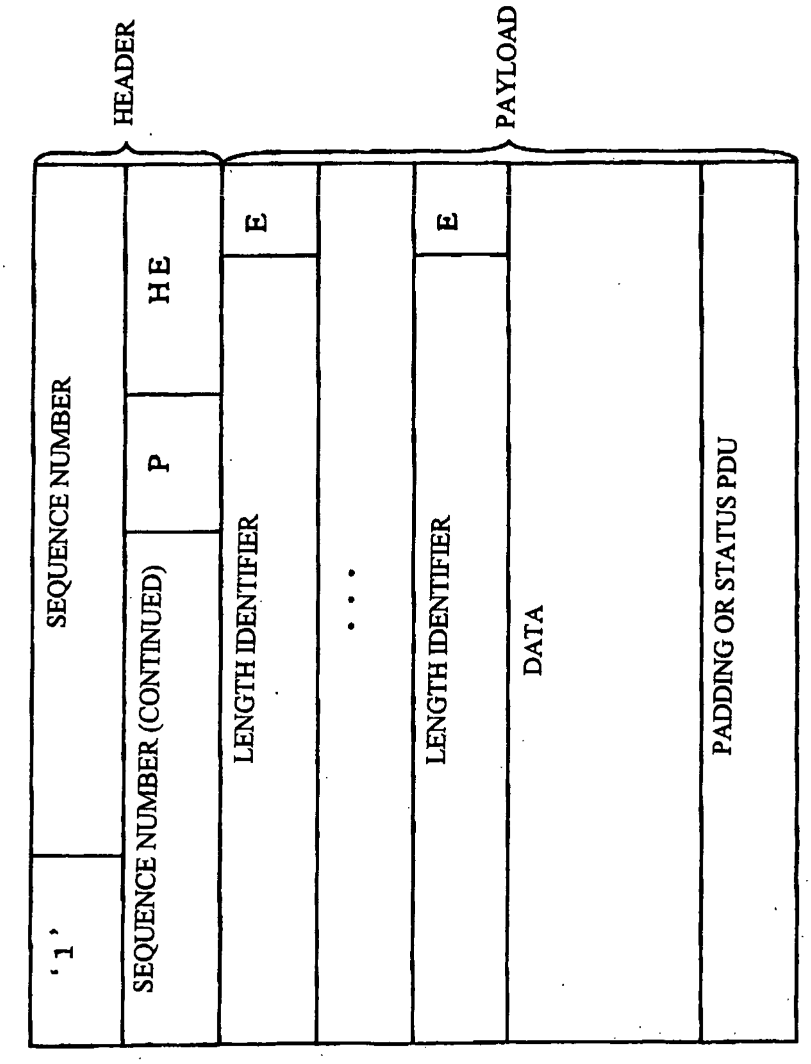
HEADER
PAYLOAD
'1'
SEQUENCE NUMBER
SEQUENCE NUMBER (CONTINUED)
P
HE
LENGTH IDENTIFIER
E
LENGTH IDENTIFIER
E
DATA
PADDING OR STATUS PDU

Fig. 9

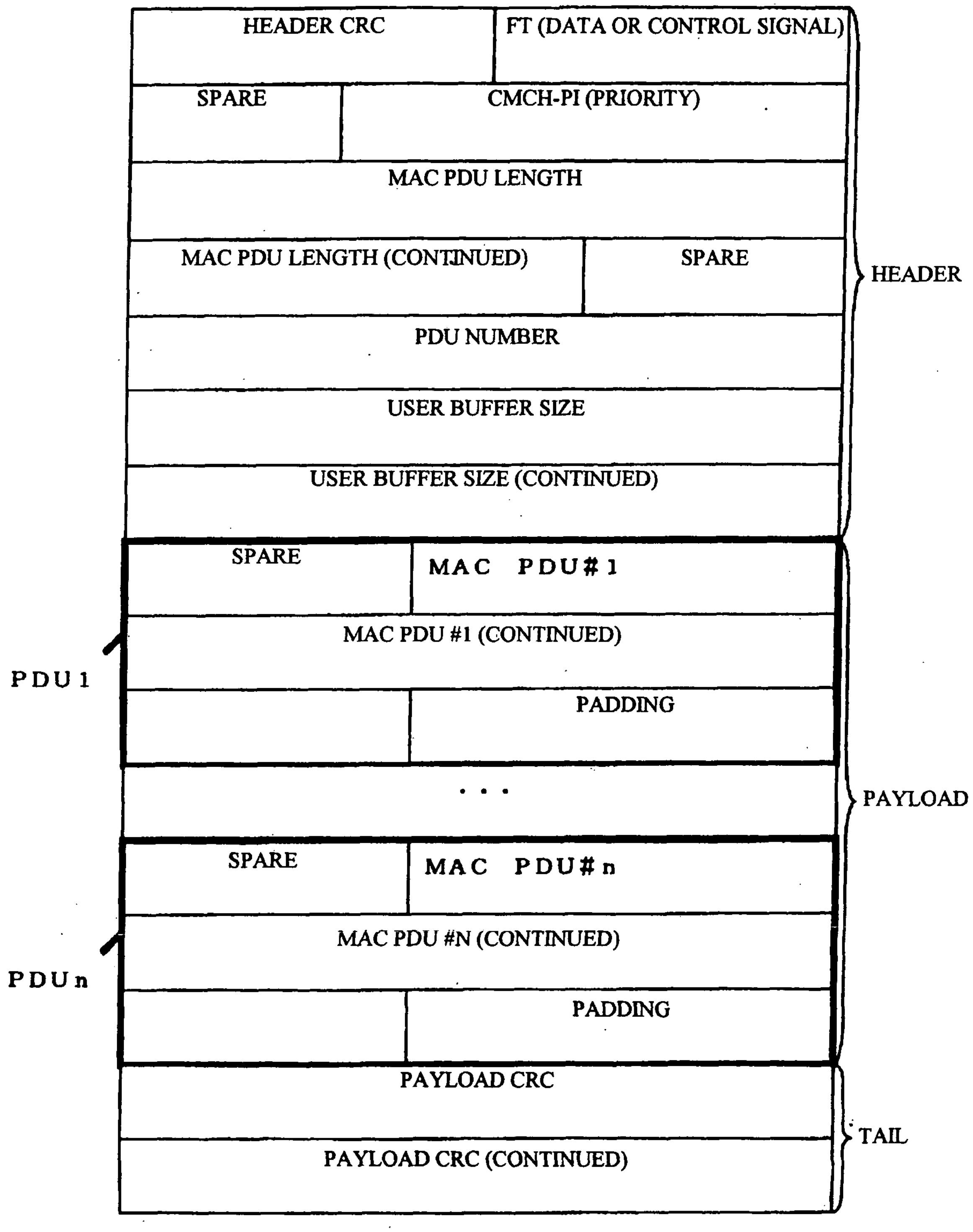
HEADER CRC
FT (DATA OR CONTROL SIGNAL)
SPARE
CMCH-PI (PRIORITY)
MAC PDU LENGTH
MAC PDU LENGTH (CONTINUED)
SPARE
PDU NUMBER
USER BUFFER SIZE
USER BUFFER SIZE (CONTINUED)
HEADER
SPARE
MAC PDU#1
MAC PDU #1 (CONTINUED)
PADDING
PDU1
. . .
PAYLOAD
SPARE
MAC PDU#n
MAC PDU #N (CONTINUED)
PADDING
PDUn
PAYLOAD CRC
PAYLOAD CRC (CONTINUED)
TAIL

Fig. 10

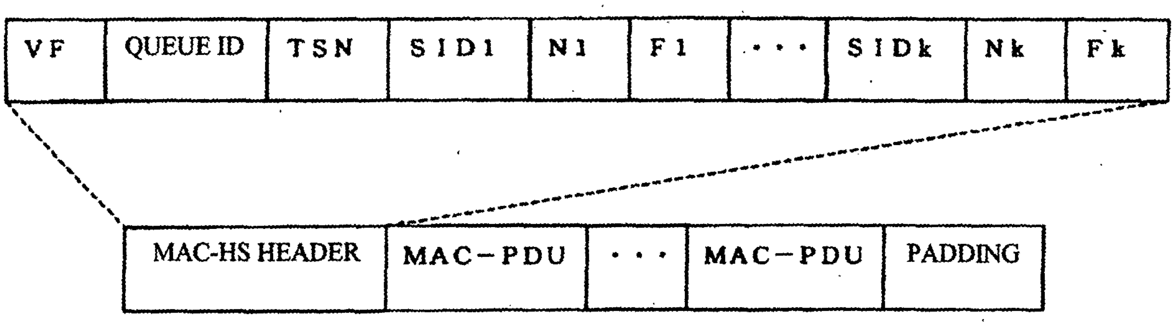
VF
QUEUE ID
TSN
SID1
N1
F1
...
SIDk
Nk
Fk
MAC-HS HEADER
MAC-PDU
...
MAC-PDU
PADDING

Fig. 11

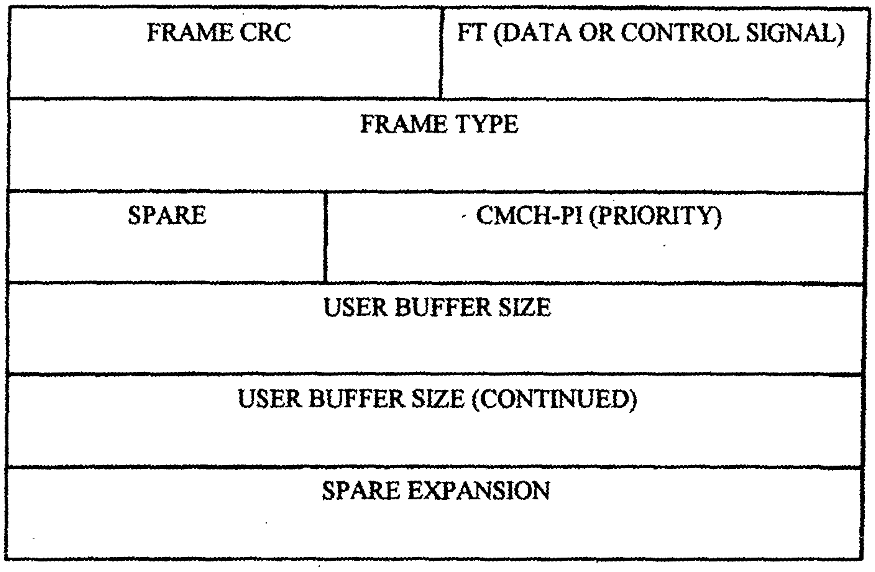
FRAME CRC
FT (DATA OR CONTROL SIGNAL)
FRAME TYPE
SPARE
CMCH-PI (PRIORITY)
USER BUFFER SIZE
USER BUFFER SIZE (CONTINUED)
SPARE EXPANSION

Fig. 12

<table>
<tr><td>FRAME CRC</td><td>FT (DATA OR CONTROL SIGNAL)</td></tr>
<tr><td colspan="2">FRAME TYPE</td></tr>
<tr><td>SPARE</td><td>CMCH-PI (PRIORITY)</td></tr>
<tr><td colspan="2">MAX MAC PDU LENGTH</td></tr>
<tr><td>MAX MAC PDU LENGTH (CONTINUED)</td><td>HS-DSCH CREDIT</td></tr>
<tr><td colspan="2">HS-DSCH CREDIT (CONTINUED)</td></tr>
<tr><td colspan="2">HS-DSCH INTERVAL</td></tr>
<tr><td colspan="2">HS-DSCH REPETITION INTERVAL</td></tr>
<tr><td colspan="2">SPARE EXTENSION</td></tr>
</table>